Europäisches Patentamt

European Patent Office

Office européen des brevets

(19)

(11) **EP 0 320 589 B2**

(12) # NEUE EUROPÄISCHE PATENTSCHRIFT

(45) Veröffentlichungstag und Bekanntmachung des Hinweises auf die Entscheidung über den Einspruch:
**29.04.1998 Patentblatt 1998/18**

(51) Int Cl.$^6$: **G05B 19/21**

(45) Hinweis auf die Patenterteilung:
**11.05.1994 Patentblatt 1994/19**

(21) Anmeldenummer: **88116713.4**

(22) Anmeldetag: **08.10.1988**

(54) **Positionsmesseinrichtung mit mehreren Abtaststellen**

Position-measuring device with several detectors

Système de détection de position muni de plusieurs détecteurs

(84) Benannte Vertragsstaaten:
**DE FR GB IT**

(30) Priorität: **14.12.1987 DE 3742295**

(43) Veröffentlichungstag der Anmeldung:
**21.06.1989 Patentblatt 1989/25**

(73) Patentinhaber: **Dr. Johannes Heidenhain GmbH
D-83292 Traunreut (DE)**

(72) Erfinder:
- **Ernst, Alfons, Dipl.-Ing.
  D-8225 Traunreut (DE)**
- **Wastlhuber, Robert, Dipl.-Ing.
  D-8268 Garching/Alz (DE)**

(56) Entgegenhaltungen:
EP-A- 241 642          WO-A-87/07943
DD-A- 97 336           DE-A- 1 811 961
FR-A- 2 596 223        GB-A- 1 085 665
GB-A- 1 087 165        GB-A- 1 302 762
GB-A- 2 076 147        US-A- 3 400 391
US-A- 4 458 322        US-A- 4 580 047
US-A- 4 595 991

**Beschreibung**

Die Erfindung betrifft eine Positionsmeßeinrichtung zum Messen der relativen Winkellage zweier Objekte.

Eine derartige Positionsmeßeinrichtung wird insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Unter Positionsmeßeinrichtungen werden absolute oder inkrementale Winkelmeßeinrichtungen verstanden, bei denen die Teilung eines Teilungsträgers von einer Abtasteinheit zur Erzeugung von periodischen Abtastsignalen abgetastet wird, aus denen in einer Auswerteeinrichtung Meßwerte für die Relativlage der beiden zueinander verschiebbaren Objekte, beispielsweise des Werkzeugs und des Werkstücks bzw. der beiden zugehörigen Maschinenteile der Bearbeitungsmaschine, gewonnen werden.

Bei einer derartigen Winkelmeßeinrichtung kann die Teilung des Teilungsträgers aber partielle Teilungsungenauigkeiten aufweisen. Zudem können Exzentrizitäten zwischen der Winkelteilung und der Drehachse der beiden zu messenden Objekte auftreten. Die vorgenannten Störeinflüsse können aber negative Auswirkungen auf die geforderte Meßgenauigkeit haben. Bei derartigen Positionsmeßeinrichtungen können aber diese negativen Störeinflüsse auf die Meßgenauigkeit dadurch weitgehend vermieden werden, daß die Teilung des Teilungsträgers von mehreren Abtasteinheiten beispielsweise an zwei oder vier Abtaststellen abgetastet und die von den Abtasteinheiten erzeugten periodischen Abtastsignale gleicher Phasenlage einander analog überlagert werden. Durch diese analoge Überlagerung der periodischen Abtastsignale können partielle Teilungsungenauigkeiten ausgemittelt werden. Mit zwei Abtasteinheiten können bei einer Winkelmeßeinrichtung Exzentrizitätsfehler und mit zwei weiteren Abtasteinheiten der sogenannte 2φ-Fehler der Teilscheibe eliminiert werden.

Aus der DE-PS 29 52 106 ist eine Längenmeßeinrichtung bekannt, bei der die Teilung eines Teilungsträgers von zwei in Meßrichtung beabstandeten Abtasteinheiten abgetastet wird. Die von den beiden Abtasteinheiten gewonnenen periodischen Abtastsignale werden in analoger Form einander additiv überlagert, so daß sich eine höhere Meßgenauigkeit ergibt, da durch die beiden Abtasteinheiten ein insgesamt größerer Bereich der Teilung des Teilungsträgers als bei nur einer vorgesehenen Abtasteinheit abgetastet wird; eventuelle Teilungsungenauigkeiten haben durch diese Maßnahme praktisch keinen Einfluß auf die Meßgenauigkeit.

Die US-PS 4,580,047 beschreibt eine Winkelmeßeinrichtung mit zwei Abtasteinheiten an zwei diametral gegenüberliegenden Abtaststellen zur Eliminierung von Exzentrizitätsfehlern und zur Überwachung der Phasenlage der periodischen Abtastsignale.

Die DE-OS 18 11 961 offenbart ebenfalls eine Winkelmeßeinrichtung mit zwei Abtasteinheiten an zwei diametral gegenüberliegenden Abtaststellen, deren periodische Abtastsignale einander in analoger Form additiv überlagert werden, so daß neben der Unwirksammachung von eventuellen Teilungsungenauigkeiten der Teilscheibe auch Exzentrizitätsfehler der Lagerung der Teilscheibe eliminiert werden.

Die z. B. bei der Doppelabtastung der Winkelteilung einer Winkelmeßeinrichtung mittels der beiden Abtasteinheiten an den beiden Abtaststellen gewonnenen zwei periodischen Abtastsignale gleicher Phasenlage weisen im theoretischen Fall einer nicht vorhandenen Exzentrizität keine gegenseitige Phasenverschiebung auf. Die praktisch immer vorhandene Exzentrizität bewirkt jedoch eine gegenseitige Phasenverschiebung der beiden periodischen Abtastsignale, die bis zu einem gewissen Grad ohne nachteilige Auswirkung auf die Meßgenauigkeit zugelassen werden kann; die noch zulässige Exzentrizität sollte daher 1/10 der Gitterkonstanten (Periodenlänge) der Winkelteilung nicht überschreiten. Bei Überschreitung dieses Grenzwertes besteht die Gefahr, daß das analoge Summensignal der beiden periodischen Abtastsignale zu klein wird. Beträgt die Exzentrizität ein Viertel der Gitterkonstanten der Winkelteilung, so eilen das erste periodische Abtastsignal der ersten Abtasteinheit an der ersten Abtaststelle um 90° in Phase vor und das zweite Abtastsignal der zweiten Abtasteinheit an der zweiten Abtaststelle um 90° in der Phase nach, so daß die beiden periodischen Abtastsignale einen gegenseitigen Phasenunterschied um 180° aufweisen, der zur einer Auslöschung ihres Summensignals führt, so daß kein Meßwert gebildet werden kann.

Die Gefahr der Überschreitung dieses Grenzwertes besteht insbesondere bei großen Beschleunigungen durch Stöße oder Vibrationen der Bearbeitungsmaschine bei einer Werkstückbearbeitung. In diesem Fall ist die Doppelabtastung, die im Normalbetrieb zur Erhöhung der Meßgenauigkeit dient von Nachteil, da die beiden periodischen Abtastsignale bei ihrer Summenbildung sich gegenseitig ganz oder zumindest teilweise aufheben können, so daß fehlerhafte Meßergebnisse die Folge sind.

In der nicht vorveröffentlichten deutschen Patentanmeldung P 37 26 260.2 ist eine Positionsmeßeinrichtung mit mehreren Abtasteinheiten an mehreren Abtaststellen beschrieben, bei der die durch eine vorliegende Exzentrizität bedingten gegenseitigen Phasenverschiebungen der gewonnenen periodischen Abtastsignale überprüft werden. Ergibt diese Überprüfung der gegenseitigen Phasenverschiebung der periodischen Abtastsignale der verschiedenen Abtasteinheiten an den zugehörigen Abtaststellen eine unzulässige Überschreitung eines vorgegebenen Toleranzbereiches, so werden die periodischen Abtastsignale der verschiedenen Abtasteinheiten mittels einer Steuereinrichtung ungleich gewichtet; dabei werden die Amplituden des einen periodischen Abtastsignals vergrößert und die Amplitude des anderen periodischen Abtastsignals verringert, so daß eine teilweise oder sogar ganze Aufhebung bei ihrer Summenbildung vermieden wird. Diese Positionsmeßeinrichtung ist aber wegen der Steuereinrichtung zur Gewichtung der periodischen Abtastsignale relativ aufwendig aufgebaut.

Eine weitere Lösung der angesprochenen Problematik ist ferner aus der US 4,580,047 bekannt. Wie dort etwa in den Figuren 6 und 7 veranschaulicht ist, werden die aufgrund von Exzentrizitäten phasenverschobenen, sinusförmigen Ausgangssignale der gegenüberliegenden Abtasteinheiten unmittelbar anschließend über Schmitt-circuits in Rechtecksignale umgewandelt. Über einen sogenannten ,,Edge-Detector" erfolgt die Signal-Weiterverarbeitung. Hierzu werden den beiden Verarbeitungskanälen des ,,Edge-Detectors" höherfrequente Taktpulse eines Taktgenerators zugeführt. In den beiden Kanälen liefert der derart betriebene ,,Edge-Detector" jeweils Zählpulse für die ansteigenden und abfallenden Signalflanken der Rechtecksignale. Im Fall einer gegebenenfalls vorhandenen Exzentrizität liegen zwei Pulse, so daß noch eine Halbierung der gemessenen Zählpulse erforderlich wird und derart schließlich unmittelbar die bereits korrigierten, inkrementellen Zählpulse zur Winkelbestimmung zur Verfügung stehen. Diese können in bekannter Weise aufsummiert werden. Bei einer derartigen bekannten Vorrichtung liegen jedoch ausgangsseitig am "Edge-Detector" keine phasenversetzten analogen Abtastsignale vor. Die Kompatibilität mit bekannten Verarbeitungselektroniken ist somit nicht gegeben.

Eine weitere Lösung der angesprochenen Probleme ist ferner aus der GB 2 076 147 bekannt. Hierbei werden zunächst die gelieferten Abtastsignale digitalisiert. Die anschließende Weiterverarbeitung der digitalisierten Signale entspricht bekannten digitalen Interpolationsverfahren, innerhalb der auch die erwähnten exzentrizitätsbedingten Phasenfehler korrigiert werden. Ausgangsseitig liegt innerhalb dieser Vorrichtung nach Durchführung der einzelnen Verarbeitungsschritte letztlich bereits die interessierende Größe, nämlich der Verdrehwinkel in digitalisierter Form vor. Auch bei einer derartigen Vorrichtung ist die Kompatibilität mit bekannten Auswerte-Elektroniken nicht gewährleistet, die üblicherweise zwei um 90° phasenversetzte Analogsignale voraussetzen.

Der Erfindung liegt daher die Aufgabe zugrunde, eine Positionsmeßeinrichtung zum Messen der relativen Winkellage zweier Objekte anzugeben, bei der aus den periodischen Abtastsignalen mehrerer Abtasteinheiten an mehreren Abtaststellen wenigstens ein resultierendes Signal gewonnen werden kann, das keine Phasenverschiebung bezüglich seiner geforderten Phasenlage bei auftretenden Störeinflüssen aufweist. Gefordert ist ferner die Kompatibilität der Positionsmeßeinrichtung mit herkömmlichen Auswerte-Elektroniken.

Diese Aufgabe wird durch eine Positionsmeßeinrichtung mit den Merkmalen des Anspruches 1 gelöst.

Die mit der Erfindung erzielten Vorteile bestehen darin, daß insbesondere bei einer Winkelmeßeinrichtung das resultierende Signal keine exzentrizitätsbedingte Phasenverschiebung mehr aufweist; dadurch müssen einmal die zusammenwirkenden Abtasteinheiten an den verschiedenen Abtaststellen in ihrer gegenseitigen Lage nicht genau justiert und zum anderen die Teilscheibe mit der Winkelteilung nicht mehr exakt bezüglich der Drehachse der beiden zu messenden Objekte zentriert werden. Durch den Fortfall der Steuereinrichtung ergibt sich eine einfacher aufgebaute Positionsmeßeinrichtung. Zudem wird durch das resultierende Signal bereits eine Unterteilung der Gitterkonstanten (Periodenlänge) der Teilung des Teilungsträgers bewirkt. Insgesamt haben auftretende Störeinflüsse keinen Einfluß mehr auf die Meßgenauigkeit.

Vorteilhafte Ausbildungen der Erfindung entnimmt man den Unteransprüchen.

Ausführungsbeispiele der Erfindung werden anhand der Zeichnung näher erläutert.

Es zeigen

Figur 1    eine erste Winkelmeßeinrichtung mit zwei Abtasteinheiten und einer Auswerteeinrichtung und
Figur 2    eine zweite Winkelmeßeinrichtung mit zwei Abtasteinheiten und einer Auswerteeinrichtung und
Figur 3    eine dritte Winkelmeßeinrichtung.

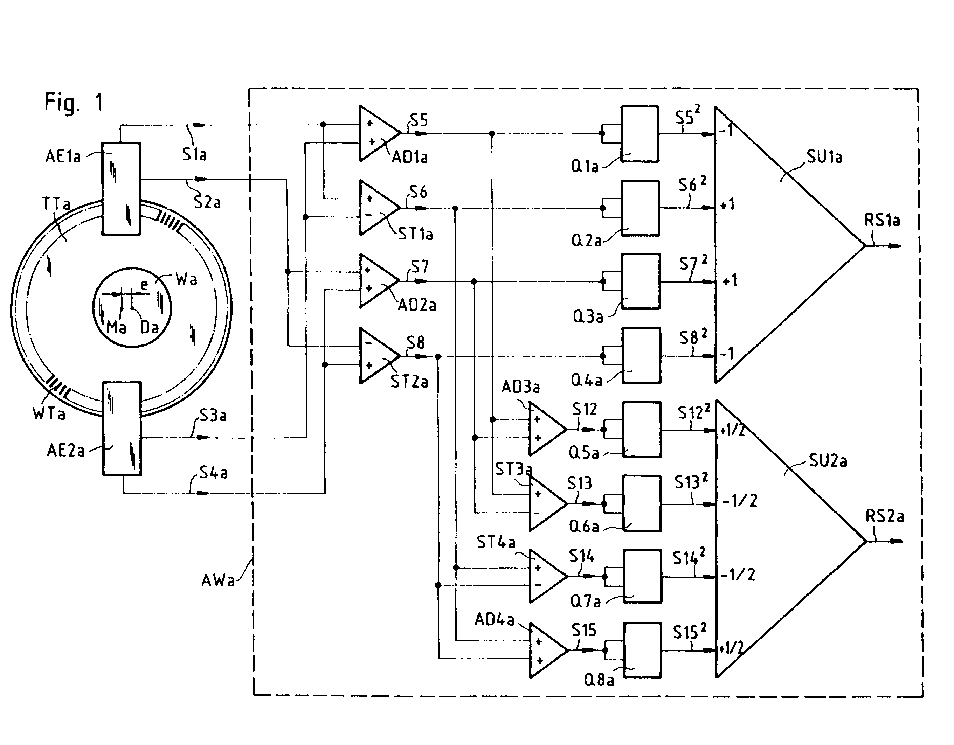

In Figur 1 ist eine erste Winkelmeßeinrichtung schematisch dargestellt, bei der eine Teilscheibe TTa mit einer Winkelteilung WTa an einer Welle Wa befestigt ist, die mit einem nicht gezeigten drehbaren Objekt, beispielsweise einer Spindel eines Maschinentisches einer Bearbeitungsmaschine, verbunden ist. Zwei einander diametral gegenüberliegende Abtasteinheiten AE1a, AE2a sind mit einem nicht gezeigten stationären Objekt, beispielsweise dem Bett der Bearbeitungsmaschine, verbunden und tasten die Winkelteilung WTa der Teilscheibe TTa zur Erzeugung jeweils zweier periodischer Abtastsignale S1a, S2a, S3a, S4a bei einer Drehung er Teilscheibe TTa bezüglich der beiden Abtasteinheiten AE1a, AE2a ab. Die beiden periodischen Abtastsignale S1a, S2a der ersten Abtasteinheit AE1a und die beiden periodischen Abtastsignale S3a, S4a der zweiten Abtasteinheit AE2a weisen jeweils einen gegenseitigen Phasenversatz um 90° auf, der in bekannter Weise zur Diskriminierung der Drehrichtung der Teilscheibe TTa dient. Die beiden ersten Abtastsignale S1a, S3a der beiden Abtasteinheiten AE1a, AE2a besitzen somit die Phasenlage 0° und die beiden zweiten Abtastsignale S2a, S4a der beiden Abtasteinheiten AE1a, AE2a die Phasenlage 90°.

Der Mittelpunkt Ma der Teilscheibe TTa bzw. die Winkelteilung WTa mögen gegenüber der Drehachse Da der Welle Wa eine Exzentrizität e aufweisen. Diese Exzentrizität e kann durch eine unvollkommene Zentrierung des Mittelpunktes Ma der Teilscheibe TTa bzw. der Winkelteilung WTa bezüglich der Drehachse Da der Welle Wa oder durch Lagerfehler der Welle Wa oder durch Beschleunigungen infolge von Erschütterungen oder Vibrationen der Bearbeitungsmaschine, die die Teilscheibe TTa momentan aus ihrer Mittenlage entfernen, bewirkt sein. Durch diese Exzentrizität e wird eine phasenverschiebung 2β wirksam, die man so verstehen kann, daß die beiden periodischen Abtastsignale Sla, S2a der ersten Abtasteinheit AE1a beispielsweise um die Phasenverschiebung +β voreilen und die beiden periodischen Abtastsignale S3a, S4a der zweiten Abtasteinheit AE2a um die Phasenverschiebung -β nacheilen, bezogen jeweils auf die geforderten Phasenlagen 0°, 90° bei nicht vorhandener Exzentrizität e.

Man erhält somit bei nicht vorhandener Exzentrizität e die vier periodischen Abtastsignale

$$S1a = A1\sin\alpha \qquad S3a = A3\sin\alpha$$

$$S2a = A2\cos\alpha \qquad S4a = A4\cos\alpha$$

und bei vorhandener Exzentrizität e die vier periodischen Abtastsignale

$$S1a = A1\sin(\alpha+\beta) \qquad S3a = A3\sin(\alpha-\beta)$$
$$S2a = A2\cos(\alpha+\beta) \qquad S4a = A4\cos(\alpha-\beta) \qquad \text{mit } \beta=e/P$$

Es bedeuten $\alpha = 2\pi x/P$ das Argument der vier periodischen Abtastsignale S1a, S2a, S3a, S4a, x den Meßwinkel, P die Periodenlänge (Gitterkonstante) der Winkelteilung WTa der Teilscheibe TTA und A1, A2, A3, A4 die maximalen Amplituden der vier periodischen Abtastsignale S1a, S2a, S3a, S4a. Aus Gründen der übersichtlichkeit der nachfolgenden Rechnungen mögen der Index a entfallen und die maximalen Amplituden A1, A2, A3, A4 auf den Wert 1 normiert sein.

Es ergibt sich somit:

$$S1 = \sin(\alpha+\beta) = \sin\alpha \, \cos\beta + \cos\alpha \, \sin\beta$$

$$S2 = \cos(\alpha+\beta) = \cos\alpha \, \cos\beta - \sin\alpha \, \sin\beta$$

$$S3 = \sin(\alpha-\beta) = \sin\alpha \, \cos\beta - \cos\alpha \, \sin\beta$$

$$S4 = \cos(\alpha-\beta) = \cos\alpha \, \cos\beta + \sin\alpha \, \sin\beta$$

Durch Addition und Subtraktion sowie durch Quadrierung kann man aus den vier periodischen Abtastgignalen S1 - S4 folgende Signale bilden:

$$S5 = S1 + S3 = 2\sin\alpha \, \cos\beta$$

$$S6 = S1 - S3 = 2\cos\alpha \, \sin\beta$$

$$S7 = S2 + S4 = 2\cos\alpha \, \cos\beta$$

$$S8 = S2 - S4 = 2\sin\alpha \, \sin\beta$$

$$S9 = S5^2 + S8^2 = 4\sin^2\alpha$$

$$S10 = S6^2 + S7^2 = 4\cos^2\alpha$$

$$S11 = S10 - S9 = 4\cos 2\alpha$$

$$S12 = S5 + S7 = 2(\sin\alpha + \cos\alpha)\cos\beta$$

$$= 2\sqrt{2}\sin(\alpha + \pi/4)\cos\beta$$

$$S13 = S5 - S7 = 2(\sin\alpha - \cos\alpha)\cos\beta$$

$$= 2\sqrt{2}\sin(\alpha - \pi/4)\cos\beta$$

$$S14 = S6 - S8 = 2(\cos\alpha - \sin\alpha)\sin\beta$$

$$= -2\sqrt{2}\sin(\alpha - \pi/4)\sin\beta$$

$$S15 = S6 + S8 = 2(\cos\alpha + \sin\alpha)\sin\beta$$

$$= 2\sqrt{2}\sin(\alpha + \pi/4)\sin\beta$$

$$S16 = S12^2 + S15^2 = 8\sin^2(\alpha + \pi/4)$$

$$S17 = S13^2 + S14^2 = 8\sin^2(\alpha - \pi/4)$$

$$= 8\cos^2(\alpha + \pi/4)$$

$$S18 = (S16 - S17)/2 = 4\sin^2(\alpha + \pi/4) - 4\cos^2(\alpha + \pi/4)$$

$$= -4\cos 2(\alpha + \pi/4) = -4\cos(2\alpha + \pi/2)$$

$$S18 = 4\sin 2\alpha$$

Wie beim Stand der Technik ergeben sich durch Addition des ersten periodischen Abtastsignals $S1 = \sin(\alpha + \beta)$ der ersten Abtasteinheit AE1a und des ersten periodischen Abtastsignals $S3 = \sin(\alpha - \beta)$ der zweiten Abtasteinheit AE2a das erste Summensignal $S5 = 2\sin\alpha\cos\beta$ und durch Addition des zweiten periodischen Abtastsignals $S2 = \cos(\alpha + \beta)$ der ersten Abtasteinheit AE1a und des zweiten periodischen Abtastsignals $S4 = \cos(\alpha - \beta)$ der zweiten Abtasteinheit AE2a das zweite Summensignal $S7 = 2\cos\alpha\cos\beta$; diese beiden Summensignale S5 und S7 hängen von der durch die Exzentrizität e bedingten Phasenverschiebung β ab und werden bei β = 90° zu Null, da sich die beiden periodischen Abtastsignale S1 und S3 bzw. S2 und S4 gegenseitig auslöschen, so daß aus den beiden Summensignalen $S5 = S7 = 0$ keine Meßwerte für die Relativlage der beiden Objekte gebildet werden können, wodurch sich Meßfehler ergeben.

Dagegen ergeben sich nach der Erfindung ein erstes periodisches resultierendes Signal $RS1a = S18 = 4\sin 2\alpha$ und ein zweites periodisches resultierendes Signal $RS2a = S11 = 4\cos 2\alpha$ die nicht mehr von der durch die Exzentrizität e bedingten Phasenverschiebung β abhängen. Diese beiden resultierenden Signale RS1a, RS2a weisen den geforderten gegenseitigen Phasenversatz von 90° zur Diskriminierung der Drehrichtung der Teilscheibe TTa sowie die doppelte Ortsfrequenz gegenüber den vier periodischen Abtastsignalen S1a, S2a, S3a, S4a auf, so daß sich eine Zweifachunterteilung der Periodenlänge (Gitterkonstanten) der Winkelteilung WTa der Teilscheibe TTa ergibt. Das erste resultierende Signal RS1a mit der Phasenlage 0° und das zweite resultierende Signal RS2a mit der Phasenlage 90° weisen jeweils eine vervierfachte Amplitude gegenüber den Amplituden der vier periodischen Abtastsignale S1a, S2a, S3a, S4a auf und stehen für alle bekannten Interpolationsverfahren zur Verfügung. Aus den beiden resultierenden Signalen RS1a, RS2a werden sodann in bekannter Weise korrekte Meßwerte für die Relativlage der beiden Objekte gewonnen, die in digitaler Form angezeigt werden können; auftretende Störeinflüsse haben keinen Einfluß auf diese Meßwerte.

Zur rechnerischen Ermittlung der beiden resultierenden Signale RS1a = S18, RS2a = S11 aus den vier periodischen Abtastsignalen S1a = S1, S2a = S2, S3a = S3, S4a = S4 ist in einer ersten Auswerteeinrichtung AWa eine erste analoge Rechenschaltung vorgesehen. Es werden zur Durchführung der obigen Rechenschritte zur Gewinnung des Signals S5 das erste Abtastsignal S1 und das dritte Abtastsignal S3 einem ersten Addierer AD1a, zur Gewinnung des Signals S6 das erste Abtastsignal S1 und das dritte Abtastsignal S3 einem ersten Subtrahierer ST1a, zur Gewinnung des Signals S7 das zweite Abtastsignal S2 und das vierte Abtastsignal S4 einem zweiten Addierer AD2a sowie zur Gewinnung des Signals S8 das zweite Abtastsignal S2 und das vierte Abtastsignal 54 einem zweiten Subtrahierer ST2a zugeführt.

Die vier Signale S5, S6, S7, S8 werden in vier Quadrierern Q1a - Q4a in die Signale $S5^2$, $S6^2$, $S7^2$, $S8^2$ umgewandelt, aus denen in einem ersten Summierer SU1a das erste resultierende Signal RS1a gebildet wird. Des weiteren werden zur Gewinnung des Signals S12 das Signal S5 und das Signal S7 einer dritten Addierer AD3a, zur Gewinnung des Signals S13 das Signal 55 und das Signal S7 einem dritten Subtrahierer ST3a, zur Gewinnung des Signals S14 das Signal S6 und das Signal S8 einem vierten Subtrahierer ST4a sowie zur Gewinnung des Signals S15 das Signal S6 und das Signal 58 einem vierten Addierer AD4a zugeleitet. Die vier Signale S12, S13, S14, S15 werden in vier Quadrierern Q5a - Q8a in die Signale $S12^2$, $S13^2$, $S14^2$, $S15^2$ umgewandelt, aus denen in einem zweiten Summierer SU2a das zweite resultierende Signal RS2a gewonnen wird. An den Eingängen des ersten Summierers SU1a werden das Signal $S5^2$ mit dem Faktor -1, das Signal $S6^2$ mit dem Faktor +1, das Signal $S7^2$ mit dem Faktor +1 und das Signal $S8^2$ mit dem Faktor -1 gewichtet; an den Eingängen ces zweiten Summierers SU2a erfolgt die Gewichtung des Signals $S12^2$ mit dem Faktor + 1/2, das Signals $S13^2$ mit dem Faktor -1/2, des Signals $S14^2$ mit den Faktor -1/2 und des Signals $S15^2$ mit dem Faktor + 1/2.

Die erste analoge Rechenschaltung der ersten Auswerteeinrichtung AWa benötigt acht Quadrierer Q1a - Q8a. Werden die Amplituden A1 - A4 der vier periodischen Abtastsignale S1a - S4a auf einem konstanten Wert A = 1 durch eine Regelung gehalten, so lassen sich nach der Erfindung ein erstes resultierendes Signal RS1b und ein zweites resultierendes Signal RS2b mit nur vier Quadrierern nach folgender Rechenvorschrift gewinnen:

$$RS1b = S11' = 2 \cdot (S5^2 + S8^2) = 2 \cdot S9 = 2 - 4\sin^2\alpha$$

$$RS1b = 2\cos2\alpha$$

$$RS2b = S18' = (S12^2 + S15^2)/2 \cdot 2 = S16/2 - 2$$

$$= 4\sin^2(\alpha + \pi/4) - 2 = -2\cos2(\alpha + \pi/4)$$

$$= -2\cos(2\alpha + \pi/2)$$

$$RS2b = 2\sin2\alpha$$

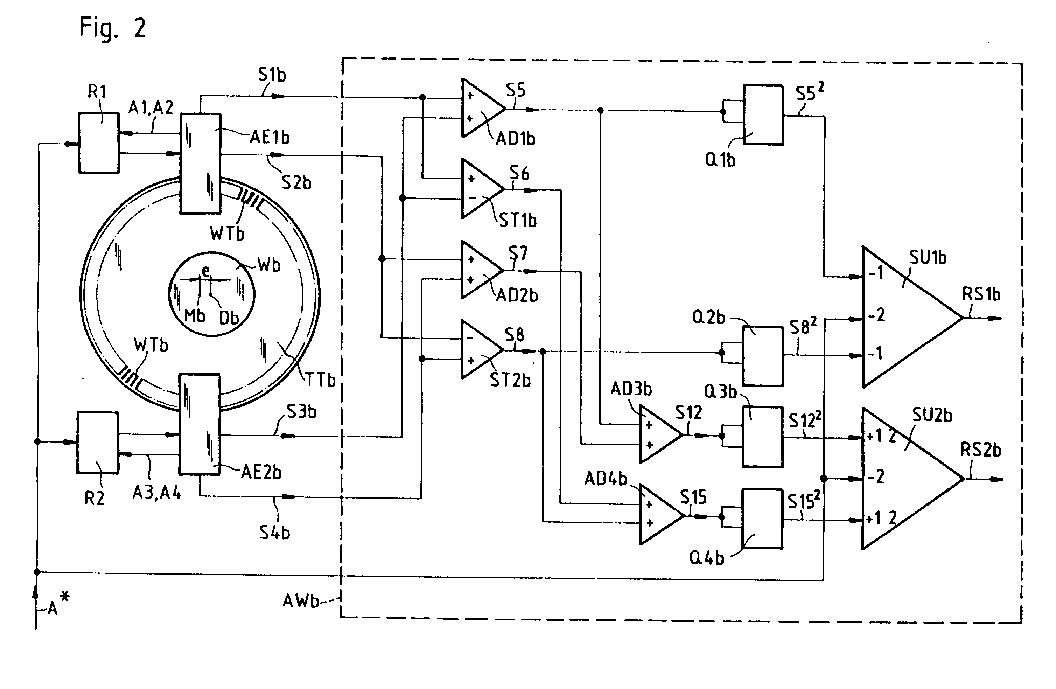

In Figur 2 ist eine zweite Winkelmeßeinrichtung dargestellt, die mit der ersten Winkelmeßeinrichtung nach Figur 1 identisch ist; die gleichartigen Elemente dieser zweiten Winkelmeßeinrichtung weisen daher die gleichen Bezugszeichen wie die Elemente der ersten Winkelmeßeinrichtung auf, jedoch sind die Indizes a durch die Indizes b ersetzt worden.

Zur rechnerischen Ermittlung der beiden periodischen resultierenden Signale RS1b = S18', RS2b = S11' aus den vier periodischen Abtastsignalen S1b = S1, S2b = S2, S3b = S3, S4b = S4 ist in einer zweiten Auswerteeinrichtung AWb eine zweite analoge Rechenschaltung vorgesehen. Es werden zur Durchführung der obigen Rechenschritte zur Gewinnung des Signals S5 das erste Abtastsignal S1 und das dritte Abtastsignal S3 einem ersten Addierer AD1b, zur Gewinnung des Signals S6 das erste Abtastsignal S1 und das dritte Abtastsignal S3 einem ersten Subtrahierer ST1b, zur Gewinnung des Signals S7 das zweite Abtastsignal S2 und das vierte Abtastsignal S4 einem zweiten Addierer AD2b sowie zur Gewinnung des Signals S8 das zweite Abtastsignal S2 und das vierte Abtastsignal S4 einem zweiten Subtrahierer ST2b zugeführt.

Das Signal S5 wird in einem ersten Quadrierer Q1b in das Signal $S5^2$ umgewandelt und dem ersten Eingang eines ersten Summierers SU1b mit dem Gewichtungsfaktor -1 zugeführt; desgleichen wird das Signal S8 in einem zweiten Quadrierer Q2b in das Signal $S8^2$ umgewandelt und dem zweiten Eingang des ersten Summierers SU1b mit dem Gewichtungsfaktor -1 zugeleitet. Des weiteren werden zur Gewinnung des Signals S12 das Signal S5 und das Signal S7 einem dritten Addierer AD3b und zur Gewinnung des Signals S15 das Signal S6 und das Signal S8 einen vierten Addierer AD4b zugeleitet. Das Signal S12 wird in einem dritten Quadrierer Q3b in das Signal $S12^2$ umgewandelt und dem ersten Eingang eines zweiten Summierers SU2b mit dem Gewichtungsfaktor +1/2 zugeführt; desgleichen wird das Signal S15 in einem vierten Quadrierer Q4b in das Signal $S15^2$ umgewandelt und dem zweiten Eingang des zweiten Summierers SU2b mit dem Gewichtungsfaktor +1/2 zugeleitet. Eine konstante Referenzspannung $A^* = 1$ wird dem dritten Eingang des ersten Summierers SU1b mit dem Gewichtungsfaktor -2 und dem dritten Eingang des zweiten Summierers SU2b mit dem Gewichtungsfaktor -2 zugeführt.

Nach der Erfindung ergeben sich somit das erste periodische resultierende Signal $RS1b = 2\sin 2\alpha$ und das zweite periodische resultierende Signal $RS2b = 2\cos 2\alpha$, die nicht mehr von der durch die Exzentrizität e bedingten Phasenverschiebung $\beta$ abhängen. Diese beiden resultierenden Signale RS1b, RS2b weisen den geforderten gegenseitigen Phasenversatz von 90° zur Diskriminierung der Drehrichtung der Teilscheibe TTb sowie die doppelte Ortsfrequenz gegenüber den vier periodischen Abtastsignalen S1b, S2b, S3b, S4b auf, so daß sich eine Zweifachunterteilung der Periodenlänge P (Gitterkonstanten) der Winkelteilung WTb der Teilscheibe TTb ergibt. Das erste resultierende Signal RS2b mit der Phasenlage 0° und das zweite resultierende Signal RS2b mit der Phasenlage 90° weisen jeweils eine doppelte Amplitude gegenüber den Amplituden der vier periodischen Abtastsignale S1b, S2b S3b, S4b auf und stehen für alle bekannten Interpolationsverfahren zur Verfügung. Aus den beiden resultierenden Signalen RS1b, RS2b werden in bekannter Weise korrekte Meßwerte für die Relativlage der beiden Objekte gewonnen, die in digitaler Form angezeigt werden können; auftretende Störeinflüsse haben keinen Einfluß auf diese Meßwerte.

Zur Regelung der Amplituden A1 - A4 der vier periodischen Abtastsignale S1b - S4b auf den konstanten Wert A = 1 werden diese in den beiden Abtasteinheiten AE1b, AE2b mittels nicht gezeigter Amplitudendetektoren ermittelt und jeweils einem ersten Regler R1 für die erste Abtasteinheit AE1b und einem zweiten Regler R2 für die zweite Abtasteinheit AE2b zugeführt. Die beiden Regler R1, R2 vergleichen die vier Amplituden A1 - A4 der vier periodischen Abtastsignale S1b - S4b mit der Referenzspannung $A^*$ und regeln die Beleuchtungseinheiten in den beiden Abtasteinheiten AE1b, AE2b derart, daß sich $A1 = A2 = A3 = A4 = = A^* = 1$ ergibt.

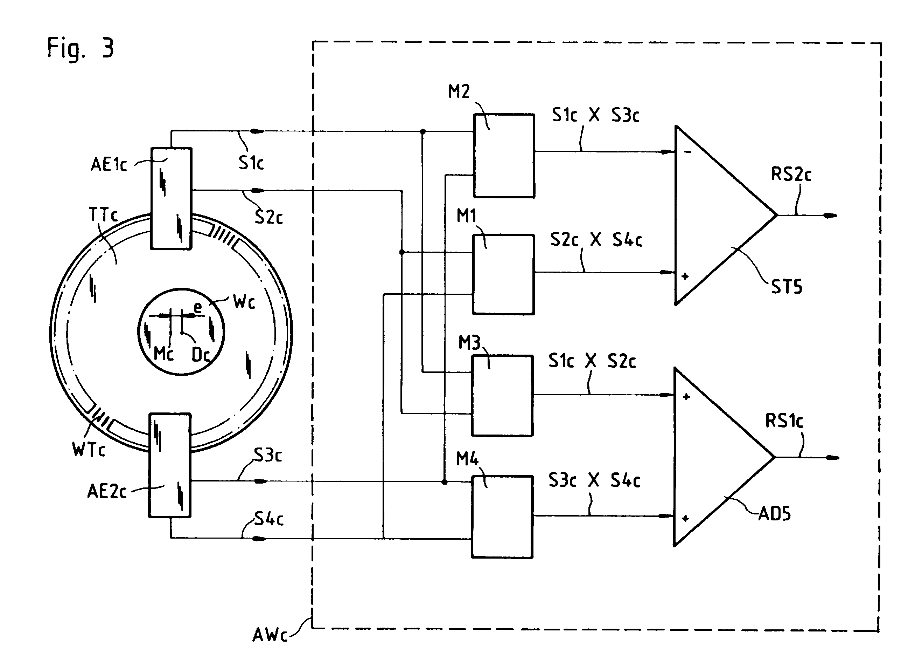

In Figur 3 ist eine dritte Winkelmeßeinrichtung dargestellt, die mit den Winkelmeßeinrichtungen nach den Figuren 1 und 2 identisch ist; die gleichartigen Elemente dieser dritten Winkelmeßeinrichtung weisen die gleichen Bezugszeichen wie die Elemente der ersten und zweiten Winkelmeßeinrichtung auf, jedoch sind die Indizes durch c ersetzt worden.

Zur rechnerischen Ermittlung der beiden periodischen resultierenden Signale $S18 = 4\sin 2\alpha$ und $S11 = 4\cos 2\alpha$ aus den vier periodischen Abtastsignalen S1c = S1, S2c = S2, S3c = S3, S4c = S4 ist in einer dritten Auswerteschaltung AWc eine dritte analoge Rechenschaltung vorgesehen.

Die Gleichung $S11 = 4\cos 2\alpha$ kann wie folgt umgeformt werden:

$$S11 = S10 - S9$$

$$= (S6^2 + S7^2) - (S5^2 + S8^2)$$

$$= ((S1 - S3)^2 + (S2 + S4)^2) - ((S1 + S3)^2$$

$$+ (S2 - S4)^2)$$

$$= S1^2 - 2S1S3 + S3^2 + S2^2 + 2S2S4 + S4^2 - S1^2$$

$$- 2S1S3 - S3^2 - S4^2 + 2S2S4 - S2^2$$

$$= 4\,S2S4 - 4S1S3$$

Bei dieser Umformung sowie bei der noch folgenden Umformung wurde aus Gründen der Übersichtlichkeit der Index c nicht angeführt.

Aus obiger Umformung ergibt sich, daß das periodisch resultierende Signal $RS\,2c = \cos 2\alpha$ durch eine analoge Rechenschaltung mit zwei Multiplizierern M1, M2 und einem Subtrahierer ST5 erzeugt werden kann. Es werden zur Durchführung der obigen Rechenschritte zur Gewinnung des Signals S2cXS4c das zweite Abtastsignal S2c und das vierte Abtastsignal S4c den ersten Multiplizierer M1, zur Gewinnung des Signals S1cXS3c das erste Abtastsignal S1c

7

und das dritte Abtastsignal S3c dem zweiten Multiplizierer M2 sowie zur Gewinnung des Signals RS 2c das Signal S2cXS4c und das Signal S1cXS3c dem Subtrahierer ST5 zugeführt.

Die Gleichung S18 = 4 sin 2$\alpha$ kann wie folgt umgeformt werden:

$$S18 = 1/2 \, (S16 - S17)$$

$$= 1/2 \, ((S12^2 + S15^2) - (S13^2 + S14^2))$$

$$= 1/2 \, (((S5 + S7)^2 + (S6 - S8)^2) -$$

$$((S5 - S8)^2 - (S6 + S8)^2))$$

$$= 1/2 \, (S5^2 + 2S5S7 + S7^2 + S6^2 - 2S6S8 +$$

$$S8^2 - S5^2 + 2S5S7 - S7^2 - S6^2 - 2S6S8 -$$

$$S8^2)$$

$$= 1/2 \, (4S5S7 - 4S6S8)$$

$$= 2S5S7 - 2S6S8$$

$$= 2 \, (S1 + S3) \, (S2 + S4) - 2 \, (S1 - S3)$$

$$(S4 - S2)$$

$$= 2 \, (S1S2 + S1S4 + S3S2 + S3S4) - 2$$

$$(S1S4 - S1S2 - S3S4 + S2S3)$$

$$= 4 \, S1S2 + 4S3S4$$

Daraus ergibt sich, daß das periodisch resultierende Signal RS 1c = sin 2$\alpha$ durch eine analoge Rechenschaltung mit zwei Multiplizierern M3, M4 und einem Addierer AD 5 erzeugt werden kann. Es werden zur Durchführung der obigen Rechenschritte zur Gewinnung des Signals S1cXS2c das erste Abtastsignal S1c und das zweite Abtastsignal S2c dem dritten Multiplizierer M3, zur Gewinnung des Signals S3cXS4c das dritte Abtastsignal S3c und das vierte Abtastsignal S4c dem vierten Multiplizierer M4 sowie zur Gewinnung des Signals RS 1c das Signal S1cX S2c und das Signal S3cXS4c dem Addierer AD 5 zugeführt.

Auch bei diesem Ausführungsbeispiel erhält an periodische resultierende Signale RS 1c und RS 2c, die unabhängig von der Phasenverschiebung β sind. Sie weisen ebenfalls den geforderten gegenseitigen Phasenversatz von 90° auf. Zur Regelung der Amplituden der vier periodischen Abtastsignale S1c bis S4c auf einen Konstanten Wert ist auch zusätzlich eine Anordnung mit Reglern wie sie zu der Figur 2 beschrieben ist denkbar.

Die in der Figur 3 gezeigte Auswerteschaltung AWc ist an sich bereits aus der DD - PS 97 336 bekannt. Die vier Signale, die bei diesem Stand der Technik an der Auswerteschaltung anliegen, haben jedoch unterschiedliche Frequenzen und wurden von einer Abtasteinheit mit zwei Abtaststellen erzeugt. Die bekannte Schaltung dient ausschließlich zur Erhöhung der Auflösung.

Bei den erfindungsgemäßen Winkelmeßeinrichtungen kann neben dem oben beschriebenen ersten Paar von einander diametral gegenüberliegenden Abtasteinheiten AE1, AE2 zur Eliminierung von Exzentrizitätsfehlern ein zweites Paar von einander diametral gegenüberliegenden Abtasteinheiten AE3, AE4 zur Eliminierung des sogenannten 2 φ -Fehlers vorgesehen sein. Neben den beiden resultierenden Signalen RS1, RS2 der beiden Abtasteinheiten AE1, AE2 des ersten Paares können auf die gleiche Weise zwei resultierende Signale RS3, RS4 der beiden Abtasteinheiten AE3, AE4 des zweiten Paares gewonnen werden. Die beiden ersten resultierenden Signale RS1, RS3 der beiden Paare können in bekannter Weise zu einem ersten Summensignal und die beiden zweiten resultierenden Signale RS2, RS4 der beiden Paare zu einem zweiten Summensignal kombiniert werden, wenn ihre Phasenverschiebungen +γ , -γ gegenüber ihren zugehörigen Phasenlagen 0°, 90° durch Störeinflüsse ein tolerierbares Maß nicht überschreiten.

Eine besonders günstige Lösung ergibt sich, wenn man aus den vier resultierenden Signalen RS1, RS2, RS3, RS4 mit den erfindungsgemäßen Rechenschritten zwei weitere resultierende Signale mit einer vierfachen Ortsfrequenz gewinnt, so daß sich eine Vierfachunterteilung der Periodenlänge P (Gitterkonstanten) der Winkelteilung WT der Teilscheibe TT ergibt.

Die Erfindung ist auch bei absoluten Winkelmeßeinrichtungen anwendbar, wenn die inkrementale Teilung mit der höchsten Auflösung an mehreren Abtaststellen abgetastet wird.

Anstelle der oben beschriebenen analogen Rechenschaltung kann auch eine digitale Rechenschaltung Verwendung finden.

Die Erfindung ist sowohl bei lichtelektrischen als auch bei magnetischen, induktiven, kapazitiven und resistiven Positionsmeßeinrichtungen mit Erfolg einsetzbar.

Besonders vorteilhaft läßt sich die Erfindung zur Abtastung einer inkrementalen Teilung mit sehr kleiner Gitterkonstante sowie zur interferometrischen Gitterabtastung wie sie beispielsweise in der DE-PS 25 11 350 beschrieben ist anwenden.

**Patentansprüche**

1. Positionsmeßeinrichtung zum Messen der relativen Winkellage zweier Objekte, mit

   - einer Winkelteilung (WTa, WTb, WTc), die auf einem mit dem einem Objekt verbundenen Teilungsträger (TTa, TTb, TTc) angeordnet ist,

   - mindestens zwei, mit dem anderen Objekt verbundenen und diametral zueinander angeordneten Abtasteinheiten (AE1a, AE2a, AE1b, AE2b, AE1c, AE2c) zur Abtastung der Winkelteilung (WTa, WTb, WTc), um damit jeweils periodische Abtastsignale (S1a, S2a, S3a, S4a, S1b, S2b, S3b, S4b, S1c, S2c, S3c, S4c) mit einer bestimmten Phasenverschiebung zwischen den Abtastsignalen (S1a, S2a, S3a, S4a, S1b, S2b, S3b, S4b, S1c, S2c, S3c, S4c) der gegenüberliegenden Abtasteinheit (AE1a,AE2a,AE1b,AE2b, AE1c, AE2c) zu erzeugen, wobei diese Phasenverschiebung exzentrizitätsbedingte Störeinflüsse ($+\beta$, $-\beta$) aufweist, sowie

   - einer, den Abtasteinheiten (AE1a,AE2a,AE1b,AE2b,AE1c, AE2c) nachgeordneten Auswerteeinrichtung (AWa,AWb,AWc), der die Abtastsignale (S1a, S2a, S3a, S4a, S1b, S2b, S3b, S4b, S1c, S2c, S3c, S4c) zugeführt werden und welche mehrere Verknüpfungselemente aufweist, die Abtastsignal-Umformoperationen durchführen unter denen mindestens ein Multiplikationsschritt ist, bei dem die periodischen Abtastsignale (S1, S2, S3, S4) miteinander multipliziert werden oder Linearkombinationen aus den periodischen Abtastsignalen (S1, S2, S3, S4) quadriert werden, um derart die exzentrizitätsbedingten Störeinflüsse ($+\beta$, $-\beta$) zu eliminieren, so daß ausgangsseitig zwei periodische, sinusförmige Signale (RS1a, RS2a, RS1b, RS2b, RS1c, RS2c) resultieren, die einen Phasenversatz von 90° zueinander aufweisen und über bekannte Interpolationsverfahren weiter verarbeitbar sind.

2. Positionsmeßeinrichtung nach Anspruch 1, wobei aus den periodischen Abtastsignalen (S1, S2, S3, S4) ein erstes resultierendes Signal (RS1a) durch die Verknüpfung

$$RS1a = [(S1+S2+S3+S4)^2 + (S1-S2-S3+S4)^2 - (S1-S2+S3-S4)^2 -$$

$$(S1+S2-S3-S4)^2]/2$$

und ein zweites resultierendes Signal (RS2a) durch die Verknüpfung

$$RS2a = (S1-S3)^2 + (S2+S4)^2 - (S1+S3)^2 - (S4-S2)^2$$

erzeugt werden.

3. Positionsmeßeinrichtung nach Anspruch 1, wobei aus den periodischen Abtastsignalen (S1, S2, S3, S4) ein erstes resultierendes Signale (RS1b) durch die Verknüpfung

$$RS1b = [(S1+S2+S3+S4)^2 + (S1-S2-S3+S4)^2]/2-2$$

und ein zweites resultierendes Signal (RS2b) durch die Verknüpfung

$$RS2b = 2 \text{ -}(S1+S3)^2 + (S4\text{-}S2)^2$$

erzeugt werden.

4.  Positionsmeßeinrichtung nach Anspruch 1, wobei analoge Verknüpfungselemente (AD, ST, SU) vorgesehen sind.

5.  Positionsmeßeinrichtung nach Anspruch 4, wobei die Verknüpfungselemente aus Addierern (AD), Subtrahierern (ST) und Summierern (SU) bestehen.

6.  Positionsmeßeinrichtung nach Anspruch 1, wobei die Abtasteinheiten (AE1, AE2) von Reglern (R1, R2) zur Konstanthaltung der Amplituden (A1, A2, A3, A4) der periodischen Abtastsignale (S1, S2, S3, S4) beaufschlagt sind.

7.  Positionsmeßeinrichtung nach Anspruch 1, wobei aus den periodischen Abtastsignalen (S1, S2, S3, S4) ein erstes resultierendes Signal (RS1c) durch die Verknüpfung

$$RS1c = (S1xS2) + (S3xS4)$$

und ein zweites resultierendes Signal (RS2c) durch die Verknüpfung

$$RS2c = (S2xS4) \text{ - } (S1xS3)$$

erzeugt werden.

8.  Positionsmeßeinrichtung nach Anspruch 7, wobei die Verknüpfung zur Erzeugung des ersten resultierenden Signals (RS1c) mittels zweier Multiplizierer (M3, M4) und eines Addierers (AD5) und die Verknüpfung zur Erzeugung des zweiten resultierenden Signals (RS2c) mittels zweier Multiplizierer (M1, M2) und eines Subtrahierers (ST5) erfolgt.

## Claims

1.  Position-measuring device for measuring the relative position of two objects, with

    -   an angular dicvision (Wta, Wtb, WTC) disposed on a division carrier ((Tta, Ttb, Ttc) connected to the object,
    -   at least two scanner units (AE1a, AE2a, AE1b, AE2b, AE1c, AE2c) connected to the other object and disposed diametrally opposite one another, for scanning the angular division (Wta, Wtb, Wtc), in order thus to generate respective periodic scanner signals (S1a, S2a, S3a, S4a, S1b, S2b, S3b, S4b, S1c, S2c, S3c, S4c) with a specific phase offsetting between the scanner signals (S1a, S2a, S3a, S4a, S1b, S2b, S3b, S4b, S1c, S2c, S3c, S4c) of the scanner unit (AE1a, AE2a, AE1b, AE2b, AE1c, AE2c) lying opposite, this phase offsetting having disturbance influences (+β, -β) caused by eccentricity, and
    -   an evaluation device (AWa, AWb, AWc) disposed after the scanner units (AE1a, AE2a, AE1b, AE2b, AE1c, AE2c), to which the scanner signals (S1a, S2a, S3a, S4a, S1b, S2b, S3b, S4b, S1c, S2c, S3c, S4c) are passed, and which has a plurality of connection elements which execute scanner signal conversion operations, among which there is at least one multiplication step, in which the periodic scanner signals (S1, S2, S3, S4) are multiplied with one another or linear combinations are squared from the periodic scanner signals (S1, S2, S3, S4) in order in this way to eliminate the disturbance influences (+β, -β) caused by eccentricity, so thattwp periodic sinusoidal signals (RS1a;RS2a, RS1b, RS2b, RS1c, RS2c) result, which are offset in phase to one another by 90°, and may be further processed via known interpolation methods.

2.  Position-measuring device according to claim 1, wherein there are generated from the periodic scanner signals (S1, S2, S3, S4) a first resultant signal (RS1a) by the combination

$$RS1a = [(S1+S2+S3+S4)^2 + (S1+S2+S3+S4)^2$$

$$- (S1-S2+S3-S4)^2 - (S1+S2-S3-S4)^2]/2,$$

and a second resultant signal (RS2a) by means of the combination

$$RS2a = (S1-S3)^2 + (S2+S4)^2$$

$$-(S1+S3)^2 - (S4-S2)^2.$$

3. Position-measuring device according to claim 1, wherein there are generated from the periodic scanning signals (S1, S2, S3, 54) a first resultant scanning signal (RS1b), by means of the combination

$$RS1b = [(S1+S2+S3+S4)^2 + (S1-S2-S3+S4)^2]/2-2;$$

and a second resultant scanning signal (RS2b) by means of the combination

$$RS2b = 2 - (S1+S3)^2 + (S4-S2)^2.$$

4. Position-measuring device according to claim 1, wherein analog or digital combining elements (AD, ST, SU) are provided.

5. Position-measuring device according to claim 4, wherein the combining elements comprise addition (AD), subtraction (ST) and summation (SU).

6. Position-measuring device according to claim 1, wherein the scanner units (AE1, AE2) are acted upon by regulators (R1, R2) in order to maintain constant the amplitudes (A1, A2, A3, A4) of the periodic scanning signals (S1, S2, S3, S4).

7. Position-measuring device according to claim 1, wherein there are generated from the periodic scanning signals (S1, S2, S3, S4) a first resultant signal (RS 1c) by means of the combination

$$RS 1c = (S1 X S2) + (S3 X S4);$$

and a second resultant signal (RS 2c) by means of the combination

$$RS2c = (S2 X S4) - (S1 X S3).$$

8. Position-measuring device according to claim 7, wherein the combination for generating the first resultant signal (RS1c) is effected by two multipliers (M3, M4) and an adder (AD5), and the combination for generating the second resultant signal (RS2c) by two multipliers (M1, M2) and one subtractor (ST5).

**Revendications**

1. Dispositif de mesure de position pour la mesure de la position angulaire relative de deux objets

- avec une graduation angulaire (WTa, WTb, WTc) qui est disposée sur un support de graduation (TTa, TTb, TTc) lié à l'un des objets,
- avec au moins deux unités de lecture (AE1a, AE2a, AE1b, AE2b, AE1c, AE2c) liées à l'autre objet et mutuellement diamétralement opposées pour la lecture de la graduation angulaire (WTa, WTb, WTc) pour produire à chaque fois des signaux de lecture périodiques (S1a, S2a, S3a, S4a, S1b, S2b, S3b, S4b, S1c, S2c, S3c, S4c) avec un déphasage déterminé entre les signaux de lecture (S1a, S2a, S3a, S4a, S1b, S2b, S3b, S4b, S1c, S2c, S3c, S4c) des unités de lecture (AE1a, AE2a, AE1b, AE2b, AE1c, AE2c) en vis-à-vis, ledit déphasage présentant des perturbations periodiques (+β, -β) résultant de l'excentricité et

- avec une unité de traitement (AWa, AWb, AWc) placée derrière les unités de lecture (AE1a, AE2a, AE1b, AE2b, AE1c, AE2c), à laquelle les signaux de lecture (S1a, S2a, S3a, S4a, S1b, S2b, S3b, S4b, S1c, S2c, S3c, S4c) sont transmis et qui comporte plusieurs éléments logiques qui exécutent des opérations de conversion de signaux de lecture, avec parmi celles-ci au moins un pas de multiplication au cours duquel les signaux de lecture périodiques (S1, S2, S3, S4) sont multipliés entre eux ou des combinaisons linéaires des signaux de lecture périodiques (S1, S2, S3, S4) sont élevées au carré afin d'éliminer les perturbations (+β, -β) résultant de l'excentricité de telle sorte qu'il en résulte côté sortie deux signaux (RS1a, RS2a, RS1b, RS2b, RS1c, RS2c) qui présentent un déphasage mutuel de 90° et peuvent être soumis à un traîtement supplémentaire par des procédés d'interpolation connus.

2. Dispositif de mesure selon la revendication 1, caractérisé par le fait qu'à partir des signaux de lecture (S1, S2, S3, S4) périodiques on produit un premier signal résultant (RS1a) par la combinaison

$$RS1a = [(S1+S2+S3+S4)^2 + (S1-S2-S3+S4)^2$$
$$- (S1-S2+S3-S4)^2 - (S1+S2-S3-S4)^2] / 2$$

et un deuxième signal résultant (RS2a) par la combinaison

$$RS2a = (S1-S3)^2 + (S2+S4)^2$$
$$- (S1+S3)^2 - (S4-S2)^2.$$

3. Dispositif de mesure selon la revendication 1, caractérisé par le fait qu'à partir des signaux de lecture (S1, S2, S3, S4) périodiques on produit un premier signal résultant (RS1a) par la combinaison

$$RS1b = [(S1+S2+S3+S4)^2 + (S1-S2-S3+S4)^2] / 2 - 2$$

et un deuxième signal résultant (RS2b) par la combinaison

$$RS2b = 2 - (S1-S3)^2 + (S4-S2)^2.$$

4. Dispositif de mesure selon la revendication 1, caractérisé par le fait qu'il est prévu des éléments logiques (AD, ST, SU) analogiques.

5. Dispositif de mesure selon la revendication 4, caractérisé par le fait que les éléments logiques sont constitués par des additionneurs (AD), des soustracteurs (ST) et des totalisateurs (SU).

6. Dispositif de mesure selon la revendication 1, dans lequel les unités de lecture (AE1, AE2) sont commandées par des régulateurs (R1, R2) pour maintenir constantes les amplitudes (A1, A2, A3, A4) des signaux de lecture (S1, S2, S3, S4) périodiques.

7. Dispositif de mesure selon la revendication 1, dans lequel à partir des signaux de lecture (S1, S2, S3, S4) périodiques on produit un premier signal résultant (RS1c) par la combinaison

$$RS1c = (S1 \times S2) + (S3 \times S4)$$

et un deuxième signal résultant (RS2c) par la combinaison

RS2c = (S2xS4) - (S1xS3).

8. Dispositif de mesure selon la revendication 7, caractérisé par le fait que la combinaison pour produire le premier signal résultant (RS1c) est réalisée au moyen de deux multiplicateurs (M3, M4) et d'un additionneur (AD5) et la combinaison pour produire le deuxième signal résultant (RS2c) est réalisée au moyen de deux multiplicateurs (M1, M2) et d'un soustracteur (ST5).

Fig. 1

Fig. 2

EP 0 320 589 B2

Fig. 3